# FASCICULE DE BREVET EUROPEEN

(11) **EP 1 666 833 B1**
(45) Date de publication et mention de la délivrance du brevet: **23.01.2008**
(21) Numéro de dépôt: 04106980.8
(22) Date de dépôt: 24.12.2004
(51) Int. Cl.: G01B 5/012

(54) **Tête de mesure orientable motorisée**
Motorisierter und orientierbarer Messkopf
Motorised and orientable measuring head

(30) Priorité: 01.12.2004 EP 04106226; 15.12.2004 EP 04106607
(43) Date de publication de la demande: 07.06.2006
(73) Titulaire: TESA SA, 1020 Renens (CH)
(72) Inventeur: Rouge, Claude, 1446, Baulmes (CH); Jordil, Pascal, 1612, Ecoteaux (CH)
(74) Mandataire: P&TS Patents & Technology Surveys SA

(56) Documents cités:
- GB-A- 2 037 436
- US-A- 5 212 646
- US-B1- 6 170 358

## Description

### Domaine technique

La présente invention concerne une tête de mesure orientable pour mesurer des coordonnées tridimensionnelles d'une pièce mécanique et notamment, mais pas uniquement, une tête de mesure orientable destinée à être utilisé sur une machine à mesurer des coordonnées manuelle ou automatique.

### Etat de la technique

Les palpeursà déclenchement sont des instruments de mesure utilisés par exemple sur des lignes de production de pièces mécaniques, pour la vérification des dimensions ou des surfaces des pièces usinées. Les palpeurs à déclenchement sont aussi utilisés pour capturer la forme tridimensionnelle de pièces complexes, afin par exemple de les reproduire ou de les modéliser.

En général les palpeurs comprennent une tête de mesure, destinée à être fixée sur un bras d'une machine à mesurer et une touche mobile, comprenant une sphère au bout d'une tige allongée et destinée à être amenée en contact avec la pièce à mesurer.

Dans la plupart des applications, les palpeurs à déclenchement sont fixéssur le brasmobile d'une machine dont la position dans l'espace est déterminable précisément à l'aide d'un système de mesure manuel ou automatique, par exemple desencodeursde position disposéssur lesaxes de la machine. Le bras mobile est déplacé dans l'espace pour amener la touche de mesure du palpeur en contact avec la pièce ou la surface à mesurer. Lorsdu contact une force de déflection est alorsappliquée sur la touche, la sortant de sa position initiale de repos. Un capteur réagit au moindre déplacement de la touche générant un signal électrique qui est envoyé soit à l'utilisateur, sousforme de signal lumineux, soit au logiciel de contrôle de la machine qui détermine ainsi à l'aide des donnéesdu système de mesure les coordonnées du point de contact dans un référentiel donné. Dans ce but on utilise dans l'art antérieur des capteurs électromécaniques ou optiques ou des capteurs de déplacement basés sur des principes différents, par exemple des capteurs comprenant des jauges de contrainte.

Dans le cas d'un palpeur à déclenchement tridimensionnel, la liaison entre la touche et la partie fixe de la tête de mesure est habituellement réalisée selon le principe de la liaison de Boys, soit par exemple par trois goupilles cylindriques reposant sur six sphères de façon à définir six points de contact entre l'organe fixe et la touche. On connaît toutefois aussi des touches bi- et unidimensionnelles.

Lorsque le palpeur est utilisé pour la mesure de piècesde forme complexe, présentant des cavités et des protubérances, il est malaisé ou impossible d'amener la touche en contact avectoute la surface de la pièce sansque la partie fixe de la tête de mesure ou la tige de la touche n'interfèrent avec des éléments de la pièce à mesurer. Pour pallier à cet inconvénient, on connaît des têtes de mesure permettant d'orienter la touche de contact dansune pluralité de directionsdans l'espace. En général deux axes de rotation indépendants sont requis pour couvrir l'ensemble des orientations possibles. Un instrument de ce type est décrit dans la demande de brevet européen EP0392660.

L'utilisation de ce type de dispositifs n'est toutefois pas limitée aux touches de contact et on peut aussi les employer avecdes capteurs sans contact, par exemple des caméras vidéo, pour inspecter et contrôler des pièces usinées, par exemple.

De préférence, les axes de rotation sont indexés, dans le sens qu'ils prévoient un nombre suffisamment grand maisfini de positions de repos prédéterminées et exactement reproductibles. Cette disposition évite de devoir calibrer à nouveau la machine à mesurer aprèschaque changement de l'orientation de la touche.

L'indexation des axes de rotation de la touche s'obtient par des surfaces d'indexation qui s'engagent mutuellement et définissent les positions de repos souhaitées, par exemple par une couronne de sphères dans laquelle s'engagent trois goupilles. Un exemple de ce type de mécanisme d'indexation est présenté dans la demande de brevet européen EP1443299 au nom de la demanderesse. Une précision optimale est obtenue lorsque les surfaces d'indexation définissent une liaison isostatique avec six pointsde contact indépendants dans chacune des positions indexés.

Pour la mesure de pièces complexes, il est souhaitable que la tête de mesure soit motorisée pour orienter la touche de palpage de façon automatique, sur commande du programme de contrôle de la machine à mesurer. A cette fin, la rotation et le verrouillage desaxesde la touche sont effectuéspar des actuateurs électromagnétiques, par exemple des moteurs ou desservomoteurs, qui écartent lessurfacesd'indexation et impriment une rotation aux axes.

Lorsque le nombre de positions indexées est élevé, le mécanisme d'entraînement desaxesdoit garantir une précision angulaire élevée sans toutefois introduire des contraintes mécaniques supplémentaires sur les élément orientables, qui pourraient nuire à la précision de l'indexation. Il est difficile, dans les têtes de mesure connues, de concilier cesdeux exigences opposées.

Il a été proposé dans GB-2 037 436 d'entraîner un élément orientable d'une tête de mesure par un moteur qui est fixé sur un élément de support de la tête de mesure.

Un but de la présente invention est de proposer une tête de mesure exempte des limitations des dispositifs connus, et notamment une tête de mesure dans laquelle la rotation autour des axes est effectuée avec précision, sans introduire des contraintes mécaniques dans la position indexée, qui pourraient affecter la précision de l'indexation.

Cesbutssont atteintspar le dispositif comprenant la combinaison des caractéristiques qui sont l'objet de la revendication, et notamment par une tête de mesure orientable pour orienter une touche de palpage relativement à un appareil de mesure, comprenant : un élément de support ; un premier élément orientable connecté audit élément de support et pouvant tourner autour d'un premier axe relativement audit élément de support ; un actuateur de rotation connecté de manière à pouvoir tourner autour dudit premier axe, une première transmission entre ledit élément de support et ledit actuateur de rotation pour entraîner ledit actuateur autour dudit premier axe à une distance constante dudit premier axe; une seconde transmission entre ledit actuateur de rotation et ledit premier élément orientable, pour entraîner ledit premier élément orientable.

### Brève description des dessins

La présente invention sera mieux comprise à la lecture de la description donnée à titre d'exemple et illustrée par les figures annexées qui représentent:
La figure 1, une vue d'une tête de mesure motorisé selon l'invention.
La figure 2, une coupe de la tête de mesure de l'invention en position verrouillée.
La figure 3, une coupe de la tête de mesure de l'invention en position déverrouillée.
La figure 4, un détail du mécanisme de verrouillage/déverrouillage de la tête de mesure de l'invention.
Les figures 5-8, différentes vues de l'actuateur responsable du verrouillage et du déverrouillage selon un aspect de l'invention.
La figure 9 une vue détaillée d'un vilebrequin comprisdans l'actuateur des figures 5-8.
La figure 10 l'actuateur de rotation de la tête de mesure de l'invention.

### Mode(s) de réalisation de l'invention

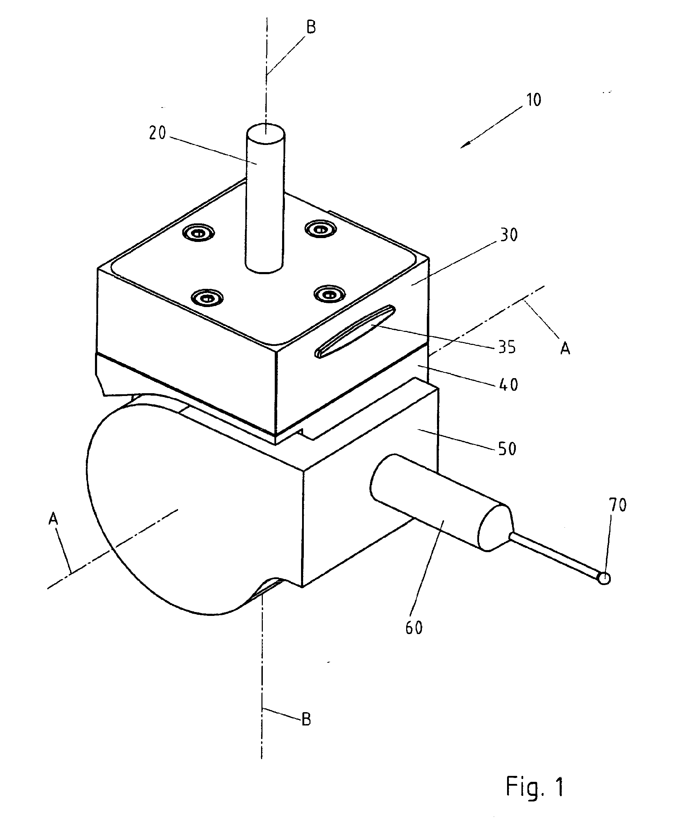

En référence à la figure 1, une tête de mesure orientable 10 selon l'invention comprend un support 30 destiné à être fixé sur le bras d'une machine à mesurer, capable de se mouvoir, par exemple selon trois axes de coordonnées X, Y et Z à l'intérieur d'un volume de mesure. La fixation peut être effectuée, par exemple, par la tige 20, ou par n'importe quel autre moyen de fixation.

Dans la suite on utilisera, par souci de simplicité, la désignation « vertical » pour se référer à l'orientation de l'axe B sur la figure 1. Cette désignation se réfère à l'orientation conventionnelle desfigureset aussi à l'orientation dans laquelle le dispositif de l'invention est normalement utilisé et qui coïncide, habituellement, avec la direction de l'axe vertical Z de la machine à mesurer sur laquelle le palpeur est monté. Cependant le palpeur peut être employé avec n'importe quelle orientation dans l'espace.

Un premier élément orientable 40 est fixé au support 30, de manière à pouvoir tourner autour de l'axe vertical B. Le premier élément orientable 40 peut, de préférence, assumer une pluralité de positions indexées, correspondantes à des multiples d'un petit angle prédéterminé, par exemple 10 degrés. De manière connue ces positions indexées sont détermi nées par exemple par une liaison isostatique définissant six points d'appui entre des éléments de positionnement dont la position est déterminée avec une grande précision.

Le second élément orientable 50 est libre de tourner autour de l'axe horizontal A, solidaire du premier élément orientable 40. La rotation du second élément orientable 50 autour de l'axe A peut être continue ou indexée, motorisée ou manuelle, comme pour le premier élément orientable 40 ci-dessus.

Une touche de palpage 60 est fixée au second élément orientable 50 et porte, à son extrémité, une sphère 70 destinée à entrer en contact avec la pièce à mesurer. Un mécanisme de détection, non représenté, répond alors au moindre déplacement de la sphère 70, par rapport à la position de repos, avec un signal électrique qui est envoyé soit au voyant lumineux 35, soit au logiciel de contrôle de la machine, par un connecteur non représenté.

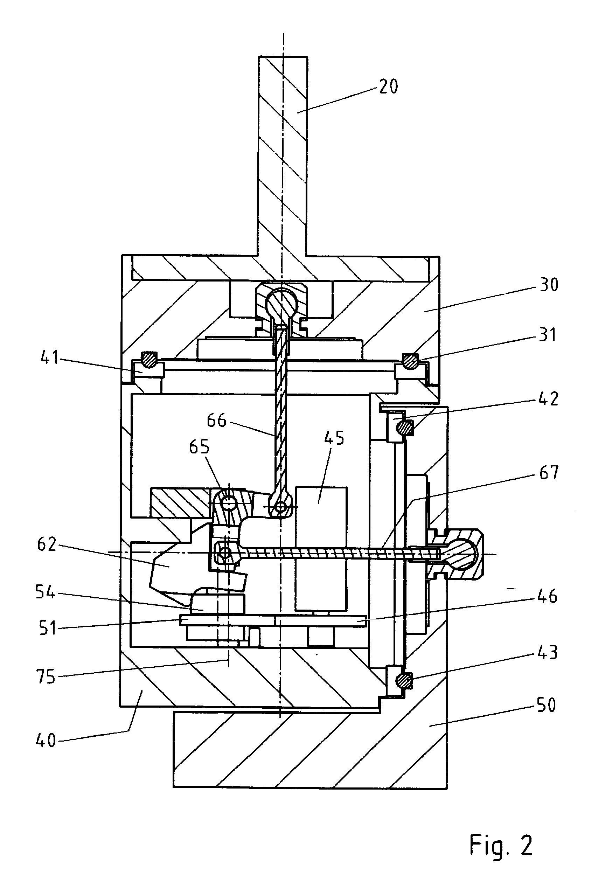

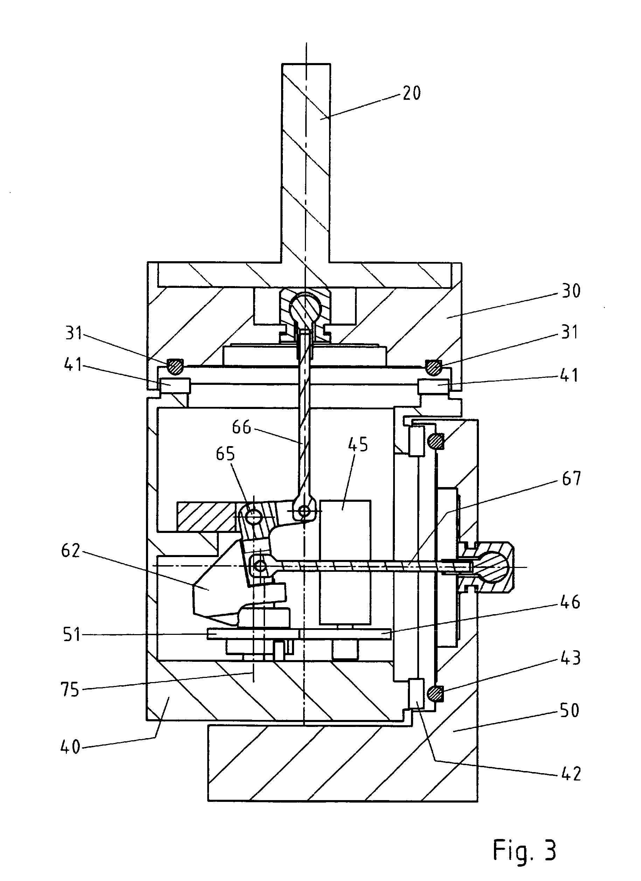

Le mécanisme de verrouillage et déverrouillage des axes selon un aspect de l'invention est maintenant décrit avec référence aux figures2 et 3.

Le support 30 porte une série de billes 31 disposées selon une circonférence avec un écartement angulaire habituellement constant, par exemple de 10° de manière à définir une série de position indexées habituellement régulièrement espacées. Le premier élément orientable 40 porte, en correspondance des billes 31, trois goupilles 41 écartées de 120° engageables avec les billes 31. En position verrouillée (figure 2), le premier élément orientable 40 est amené, par la traction de la tige 66, contre l'élément fixe 30. Chacune des goupilles 41 touche alors deux billes 31 adjacentesde manière à avoir une liaison isostatique entre l'élément de support 30 et l'élément orientable 40, selon le principe de la liaison de Boys.

De manière équivalente, dans le cadre de la présente invention, il serait possible d'échanger la position des billes et des goupilles, en disposant les premières sur l'élément orientable et les secondes sur l'élément de support. On pourrait aussi remplacer les billes et les goupilles par d'autres éléments de positionnement aptesà définir six points de contact entre l'élément de support 30 et l'élément orientable 40.

Une extrémité de la tige verticale 66 est fixée de manière articulée à l'élément de support 30, tandisque l'autre extrémité de la tige 66 est fixée de manière articulée à un brasdu levier 62, pouvant pivoter autour de l'axe 65, fixe par rapport au premier élément orientable 40. Préférablement, la tige 66 est alignée avec l'axe de rotation B.

Dans l'état verrouillé de la figure 2, la tige 66 est en tension et tire vers le haut le premier élément orientable 40 de manière à ce que les goupilles d'indexation 41 s'engagent avec les billes 31 du support 30. Dans cet état, toute rotation autour de l'axe B est impossible et l'élément orientable 40 est bloqué dansune des positionsindexées.

La force exercée par la tige 66 est appliquée centralement par rapport aux pointsde contact entre les billes 31 et le goupilles 41, et est orientée selon l'axe B. De cette manière, on obtient une répartition égale desforcesde contact entre les billes 31 et les goupilles 41, pour une précision d'indexation maximale.

Le second élément orientable 50 est aussi maintenu contre le premier élément orientable 40 par la tension de la tige horizontale 67, alignée avec l'axe A. La tige 67 est articulée d'une part par rapport à l'élément orientable 50 et d'autre part par rapport au levier 62.

Un second jeu de billes43 et de goupilles42, disposéesentre les premier et second élémentsorientablespermet de bloquer le second élément orientable 50 dans une position indexée.

Optionnellement, lestiges66 et 67 comprennent des éléments élastiques non représentés, par exemple des ressorts métalliques, pour assurer une force d'indexation constante entre lesgoupilles41, 42 et les billes 31, 43. De manière équivalente, des éléments élastiques pourraient être inclusdansle levier 62 ou dans les premier et second éléments orientables.

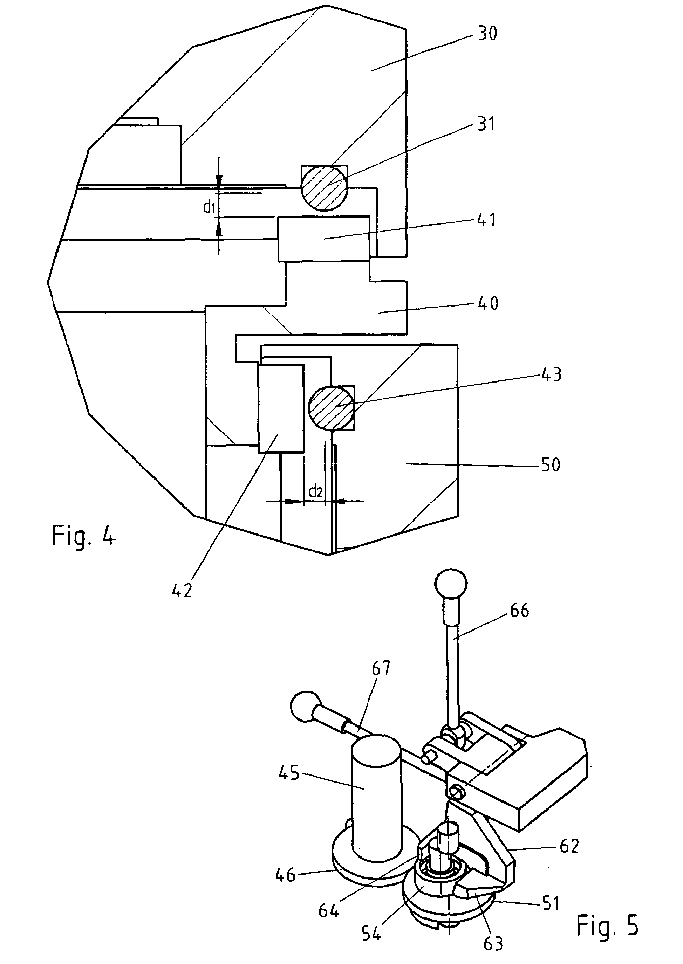

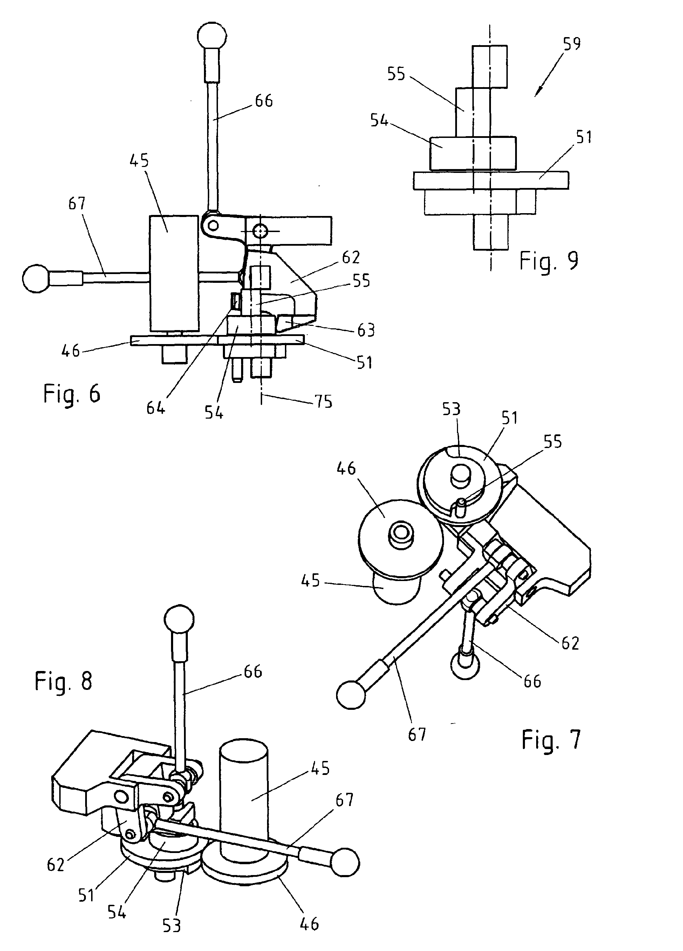

En référence aux figures5-9, la positon du levier 62 est déterminée par le vilebrequin 59, représenté en détail sur la figure 9, entraîné en rotation autour de l'axe 75 par le moteur électrique 45 et les roues dentées 46, 51. De manière équivalente le vilebrequin 59 pourrait être entraîné directement par un moteur disposé sur le même axe 75 du vilebrequin 59 ou par n'importe quelle transmission mécanique, par exemple par un système de poulies.

Un bras du levier 62 comporte une fourche dont les deux brins 63 et 64 contactent les deux cotés opposés du maneton 55 du vilebrequin 59, de manière à déplacer le levier 62 de la position verrouillée à la position déverrouillée lorsque le vilebrequin 59 tourne de 180°. Optionnellement, un roulement à billes est interposé entre le maneton 55 et la fourche, pour réduire les frottements lorsdu verrouillage et/ou du déverrouillage. Dans l'exemple illustré sur les figures, un roulement 54 est prévu seulement en correspondance du brin 63 qui transmet la force de verrouillage. En correspondance de l'autre brin 64 de la fourche, responsable du déverrouillage, les efforts requis sont plus modestes et on peut employer un simple palier antifriction.

La rotation du vilebrequin 59 autour de l'axe 75 est limitée à un angle de rotation légèrement supérieur à 180° par le secteur 53 et la goupille 55, solidaire du premier élément orientable 40. Les positions de butée de la goupille 55 contre les extrémités du secteur 53 sont disposées de manière à dépasser les points d'équilibre et doncà définir despositions de repos stables correspondant respectivement à l'état verrouillé et à l'état déverrouillé.

Les figures 3 et 4 représentent la tête de mesure selon l'invention dansson état déverrouillé. Dansce cas, le levier 62 est incliné et les tiges 66 et 67 poussent sur l'élément de support 30, respectivement sur le second élément orientable 50, de manière à écarter les élémentsd'indexation 31, 41, respectivement 42, 43 d'une distance prédéterminée d1, respectivement d2.

Dans une variante d'exécution, les tiges 66 et 67 pourraient être entraînées par un ensemble pignon/crémaillère.

L'écartement et la fermeture des surfacesd'indexation a lieu grâce à la double action des tiges 66 et 67, qui est indépendante de la direction de la force poidset des forces d'inertie, et sans l'intervention de ressorts ou d'éléments élastiques. Le mécanisme de l'invention peut donc assurer un fonctionnement fiable et rapide quelle que soit l'orientation de la tête de mesure.

Dans la position déverrouillée, la rotation autour des deux axes A et B est assurée par des servomoteurs non représentés, contrôlés par le logiciel de la machine à mesurer, ou par d'autres actuateurs automatiques équivalents.

Le mode de réalisation décrit ici comporte un seul actuateur pour verrouiller et déverrouiller les deux axes A et B simultanément. L'invention comprend toutefois aussi des variantes dans lesquelles chaque axe de rotation est verrouillé et déverrouillé par un actuateur indépendant.

Dans une variante d'exécution, la tête de mesure de l'invention ne comporte qu'un seul axe de rotation, par exemple un axe horizontal A.

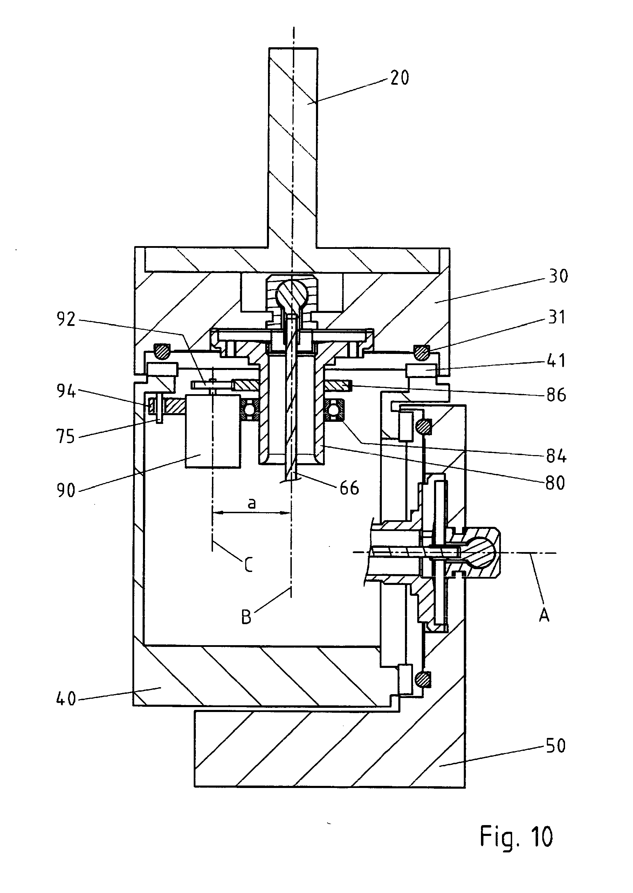

Le dispositif d'entraînement du premier élément orientable 40 autour de l'axe B est maintenant décrit avec référence à la figure 10. Le second axe horizontal de rotation A est optionnellement aussi muni d'un dispositif d'entraînement, qui ne sera pas décrit par souci de brévité.

Une douille fixe 80, solidaire de l'élément de support 30 et coaxiale avec l'axe B porte une roue dentée fixe 86, sur laquelle est engrené le pignon 92, directement entraîné par l'axe Cdu moteur 90.

Dans la position déverrouillée le roulement 84 permet la libre rotation du moteur 90 autour de l'axe B. L'entraxe (a) entre l'axe B et l'axe Cdu moteur 90 est constant, et le jeu entre le pignon 92 et la roue 86 est également constant, pour toutes les positions de l'élément orientable 40, ce qui permet de minimiser l'erreur angulaire. L'entraxe a entre la roue dentée 86 et le pignon 92 est rigidement déterminé par le roulement 84.

Le moteur 90 est de préférence un moteur pasà paset, si nécessaire, il peut aussi comprendre un groupe de réduction mécanique, ou une friction, des capteurs de fin de course, ou un codeur angulaire, pour déterminer avec précision la trajectoire de la touche de palpage. En alternative ces éléments peuvent être prévus sous forme de composants indépendants. Le roulement 84 peut être remplacé, selon les circonstances, avec un palier antifriction ou un autre dispositif de guidage équivalent.

La transmission de la rotation entre le moteur et le premier élément orientable n'est pas rigide, mais elle a lieu par un élément de transmission avec un jeu, pour éviter toute altération de la condition d'appui isostatique, dans la position verrouillée. Le moteur 90 comporte, sur sa périphérie un trou de guidage 94 dans lequel s'engage le doigt 75 solidaire de l'élément orientable 40 et parallèle audit premier axe B. De cette manière l'élément orientable 40 est entraîné en rotation autour de l'axe B par le moteur 90, tout en restant libre de coulisser axialement entre la position verrouillée et la position déverrouillée.

Le passage dans la position verrouillée comporte simplement le glissement du doigt 75 à l'intérieur du trou 94, sansque la position relative du moteur 90 par rapport à l'axe B et à l'élément de support 30 ne change. Le moteur 90 et les engrenages 86, 92 ne suivent pas l'élément orientable 40 dans son mouvement de coulissement long de l'axe B. Le jeu entre le trou 94 et le doigt 75 est suffisant pour exclure toute influence sur la précision de l'indexation en position verrouillée.

Avantageusement la paire doigt 75 et trou 94 est placée à une distance maximale de l'axe B, pour minimiser la force transmise. L'entraxe important entre le doigt 75 et l'axe B permet aussi de choisir plus facilement le jeu optimal entre le doigt 75 et le trou 94.

On a déterminé qu'un jeu entre 0,005 et 1,0 millimètres permet un positionnement précisde l'élément orientable dans les différentes positionsindexées, sans altérer la précision de l'indexation, un fonctionnement optimal étant obtenu avec un jeu comprisentre 0,01 et 0,1 millimètres. Optionnellement le doigt 75 peut être profilé pour augmenter le jeu en position verrouillée.

Naturellement le doigt 75 et le trou 94 pourraient être remplacés par un autre dispositif de transmission apte à entraîner en rotation l'élément orientable 40 par le moteur 90, par exemple par une rainure et une languette, par une glissière ou par tout autre disposition équivalente.

Dans une variante d'exécution non représentée, le moteur 90 peut être placé dans l'axe de rotation B, l'arbre du moteur 90 directement solidaire de l'élément de support 30, de manière à supprimer les engrenages 86 et 90. En cette variante l'entraxe a entre l'axe de rotation B du premier élément orientable et l'axe du moteur 90 se réduit à zéro et le moteur, dont l'arbre est bloqué par rapport à l'élément de support 30, et qui est avantageusement doté d'un groupe de réduction mécanique, tourne sur lui-même entraînant l'élément orientable 40 par la paire doigt 75 et trou 94.

Dans d'autres variantes d'exécution, le ou les systèmes d'entraînement peuvent être réalisés symétriquement, c'est-à-dire qu'ilsse retrouvent dans l'élément de support 30 et/ou dans le second élément orientable 50, plutôt que dans le premier élément orientable 40.

## Revendications

1. Tête de mesure orientable (10) pour orienter une touche de palpage (6) relativement à un appareil de mesure, comprenant :
un élément de support (30) ;
un premier élément orientable (40) connecté audit élément de support (30) et pouvant tourner autour d'un premier axe (B) relativement audit élément de support (30) ;
un actuateur de rotation (90) connecté de manière de pouvoir tourner autour dudit premier axe (B),
une première transmission (86, 92) entre ledit élément de support et ledit actuateur de rotation pour entraîner ledit actuateur autour dudit premier axe (B) à une distance constante (a) dudit premier axe (B);
une seconde transmission (75, 94) entre ledit actuateur de rotation et ledit premier élément orientable, pour entraîner ledit premier élément orientable (40).

2. Tête de mesure selon la revendication 1, dans laquelle ladite seconde transmission comprend un jeu.

3. Tête de mesure selon la revendication 2, dans laquelle ledit jeu est comprisentre 0,005 et 1,0 millimètres

4. Tête de mesure selon l'une des revendications précédentes, dans laquelle ladite première transmission comprend un couple de roues dentéesdont l'une (86) est solidaire dudit élément de support (30) et l'autre (92) est directement entraînée par un moteur (90).

5. Tête de mesure selon l'une des revendications précédentes, comprenant un roulement (84) pour supporter ledit actuateur.

6. Tête de mesure selon l'une des revendications précédentes, dans laquelle ledit premier élément orientable (40) peut coulisser dans la direction de l'axe (B) entre une position verrouillée et une position déverrouillée.

7. Tête de mesure selon la revendication 6, dans laquelle ledit actuateur ne change pasde position par rapport audit élément de support lorsque ledit premier élément orientable (40) coulisse dans la direction de l'axe (B).

8. Tête de mesure selon la revendication 7, dans laquelle ladite seconde transmission comprend un élément (75) solidaire dudit premier élément orientable et parallèle audit premier axe (B).

9. Tête de mesure selon l'une des revendications précédentes comprenant:
une pluralité d'éléments de positionnement mobiles(41) solidaires dudit premier élément orientable (40) ;
une pluralité d'éléments de positionnement fixes(31) solidaires dudit élément de support (30) et engageablesavec lesdits éléments de positionnement mobiles(41) pour définir une pluralité d'orientations prédéterminéesdudit premier élément orientable (40) relativement audit élément fixe (30).

10. Tête de mesure selon l'une des revendications précédentes comprenant:
un second élément orientable (50) connecté audit premier élément orientable pouvant tourner relativement audit premier élément orientable (40), selon un second axe (A) ;
un second actuateur de rotation connecté de manière de pouvoir tourner autour dudit premier axe (A),
une troisième transmission entre ledit premier élément orientable et ledit second actuateur de rotation pour entraîner ledit actuateur autour dudit second axe (A) à une distance constante dudit second axe ;
une quatrième transmission entre ledit second actuateur de rotation et ledit second élément orientable, pour entraîner ledit second élément orientable (40).

11. Tête de mesure selon la revendication 10 dans lequel lesdites premier axe (B) et second axe (A) sont essentiellement orthogonaux.

## Claims

1. Orientable measuring head (10) for orienting a probe feeler (6) relatively to a measuring apparatus, including:
a support element (30);
a first re-orientable element (40) connected to said support element (30) and capable of turning around a first axis (B) relatively to said support element (30);
a rotation actuator (90), connected so as to be able to turn around said first axis (B);
a first transmission (86, 92) between said support element and said rotation actuator for driving said actuator around said first axis (B) at a constant distance (a) of said first axis (B);
a second transmission (75, 94) between said rotation actuator and said first re-orientable element, for driving said first re-orientable element (40).

2. Measuring head according to claim 1, wherein said second transmission includes a play.

3. Measuring head according to claim 2, wherein said play is comprised between 0,005 and 1,0 millimeter.

4. Measuring head according to one of the preceding claims, wherein said first transmission comprises a couple of toothed wheels of which one (86) is united with said support element (30) and the other (92) is directly driven by a motor (90).

5. Measuring head according to one of the preceding claims, comprising a bearing (84) to support said actuator.

6. Measuring head according to one of the preceding claims, wherein said first re-orientable element (40) can slide in the direction of the axis (B) between a locked position and an unlocked position.

7. Measuring head according to claim 6, wherein said actuator does not change position relatively to said support element when said first re-orientable element (40) slides in the direction of the axis (B).

8. Measuring head according to claim 7, wherein said second transmission includes an element (75) united with said first re-orientable element and parallel to said first axis (B).

9. Measuring head according to one of the preceding claims, including:
a plurality of mobile positioning elements (41) solidly united with said first re-orientable element (40);
a plurality of fixed positioning elements (31) solidly united with said support element (30) and capable of engaging with said mobile positioning elements (41) to define a plurality of predetermined orientations of said first re-orientable element (40) relatively to said fixed element (30).

10. Measuring head according to one of the preceding claims, including:
a second re-orientable element (50) connected with said first re-orientable element capable of turning relatively to said first re-orientable element (40) along a second axis (A);
a second rotation actuator connected so as to be able to turn around said first axis (A);
a third transmission between said first re-orientable element and said second rotation actuator for driving said actuator around said second axis (A) at a constant distance from said second axis;
a fourth transmission between said second rotation actuator and said second re-orientable element, for driving said second re-orientable element (40).

11. Measuring head according to claim 10, wherein said first axis (B) and second axis (A) are essentially orthogonal.

## Patentansprüche

1. Orientierbarer Messkopf (10) zum Orientieren eines Tasteinsatzes (6) in Bezug auf einen Messapparat, mit:
einem Stützelement (30);
einem ersten orientierbaren Element (40), das mit dem besagten Stützelement (30) verbunden ist und das um eine erste Achse (B) in Bezug auf das besagte Stützelement (30) drehen kann;
einem Rotor (90), der so verbunden ist, dass er um die besagte erste Achse (B) drehen kann;
einem ersten Triebwerk (86, 92) zwischen dem besagten Stützelement und dem besagten Rotor, um den besagten Rotor um die besagte erste Achse (B) mit einem konstanten Abstand (a) von der ersten Achse (B) anzutreiben;
einem zweiten Triebwerk (75, 94) zwischen dem besagten Rotor und dem besagten ersten orientierbaren Element, um das besagte erste orientierbare Element (40) anzutreiben.

2. Messkopf gemäss Anspruch 1, worin das besagte zweite Triebwerk ein Spiel aufweist.

3. Messkopf gemäss Anspruch 2, worin das besagte Spiel zwischen 0,005 und 1,0 Millimeter liegt.

4. Messkopf gemäss einem der vorhergehenden Ansprüche, worin das besagte erste Triebwerk ein Paar Zahnräder, von denen das eine (86) mit dem besagten Stützelement (30) fest verbunden ist und das andere (92) direkt durch einen Motor (90) angetrieben wird.

5. Messkopf gemäss einem der vorhergehenden Ansprüche, mit einer Lagerung (84), um den besagten Rotor zu stützen.

6. Messkopf gemäss einem der vorhergehenden Ansprüche, worin das erste orientierbare Element (40) in die Richtung der Achse (B) zwischen einer verriegelten Position und einer entriegelten Position gleiten kann.

7. Messkopf gemäss Anspruch 6, worin der besagte Rotor seine Position in Bezug auf das Stützelement nicht ändert, wenn das besagte erste orientierbare Element (40) in die Richtung der Achse (B) gleitet.

8. Messkopf gemäss Anspruch 7, worin das besagte zweite Triebwerk ein Element (75) umfasst, das mit dem ersten orientierbaren Element fest verbunden ist und parallel zur besagten ersten Achse (B) ist.

9. Messkopf gemäss einem der vorhergehenden Ansprüche, mit:
einer Vielzahl von mobilen Positionierungselementen (41), welche mit dem ersten orientierbaren Element (40) fest verbunden sind;
einer Vielzahl von fixen Positionierungselementen (31), welche mit dem ersten Stützelement (30) fest verbunden sind und die mit den besagten mobilen Positionierungselementen (41) eingreifen können, um eine Vielzahl von vorbestimmten Orientierungen des besagten ersten orientierbaren Elements (40) in Bezug auf das besagte fixe Element (30) zu definieren.

10. Messkopf gemäss einem der vorhergehenden Ansprüche, mit:
einem zweiten orientierbaren Element (50), das mit dem besagten ersten orientierbaren Element verbunden ist und das in Bezug auf das besagte erste orientierbare Element (40) um eine zweite Achse (A) drehen kann;
einem zweiten Rotor, der so verbunden ist, dass er um die besagte zweite Achse (A) drehen kann;
einem dritten Triebwerk zwischen dem besagten ersten orientierbaren Element und dem besagten zweiten Rotor, um den besagten Rotor um die besagte zweite Achse (A) mit einem konstanten Abstand von der zweiten Achse anzutreiben;
einem vierten Triebwerk zwischen dem besagten zweiten Rotor und dem besagten zweiten orientierbaren Element, um das besagte zweite orientierbare Element (50) anzutreiben.

11. Messkopf gemäss Anspruch 10, worin die erste Achse (B) und zweite Achse (A) im Wesentlichen orthogonal sind.
